# FASCICULE DE BREVET EUROPEEN

(11) **EP 2 148 412 B1**
(45) Date de publication et mention de la délivrance du brevet: **18.06.2014**
(21) Numéro de dépôt: 09164171.2
(22) Date de dépôt: 30.06.2009
(51) Int. Cl.: E06B 9/174, E06B 9/50, H02K 5/00

(54) **Dispositif de fixation de la tête d'un moteur électrique sur un support, notamment pour volet roulant**
Vorrichtung zum Befestigen des Kopfes eines Elektromotors auf einer Halterung, insbesondere für Rollladen
Device for fixing the head of an electric motor on a support, in particular for a roller blind

(30) Priorité: 22.07.2008 FR 0804163
(43) Date de publication de la demande: 27.01.2010
(73) Titulaire: Zurfluh Feller, 25150 Autechaux Roide (FR)
(72) Inventeur: Meny, Frédéric, 25150 Autechaux Roide (FR); Allemand, Jean-Marie, 25190 Villars-sous-Dampjoux (FR)
(74) Mandataire: Michardière, Bernard

(56) Documents cités:
- DE-A1- 2 829 078
- DE-A1- 19 630 030
- FR-A- 2 533 084

## Description

L'invention est relative à un dispositif de fixation de la tête d'un moteur électrique sur un support dont le plan moyen est orthogonal à l'axe géométrique de rotation du moteur, la tête comportant une forme mâle/femelle propre à coopérer, par translation, avec une forme femelle/mâle conjuguée prévue dans le support.

L'invention concerne plus particulièrement, mais non exclusivement, un tel dispositif de fixation pour moteur électrique d'entraînement d'un volet roulant.

DE 28 29 078 montre un dispositif de fixation de ce genre. Le support comporte deux étriers pouvant être écartés élastiquement pour mise en place du moteur entre eux. La tête du moteur est en appui axial contre l'un des étriers, l'autre extrémité du moteur est en appui axial contre l'autre étrier. Le maintien axial du moteur est donc obtenu à l'aide d'un support relativement compliqué et encombrant, avec nécessité d'accéder aux deux extrémités du moteur.

L'invention a pour but, surtout, de fournir un dispositif de fixation simple et rapide à mettre en oeuvre tout en assurant une bonne précision de montage et de centrage.

Selon l'invention, un dispositif de fixation de la tête d'un moteur électrique sur un support, dont le plan moyen est orthogonal à l'axe géométrique de rotation du moteur, la tête comportant une forme mâle/femelle propre à coopérer, par translation, avec une forme femelle/mâle conjuguée prévue dans le support, est caractérisé en ce que :
- les formes comportent sur leur périphérie au moins deux orifices espacés angulairement, propres à venir en regard pour une orientation relative appropriée des deux formes,
- et un organe de verrouillage en forme de C, à extrémités recourbées vers le centre, est prévu pour s'engager, par ses extrémités recourbées, dans les orifices en regard des deux formes et verrouiller ainsi la tête relativement au support, tout en laissant libre la zone centrale de la tête et du support.

De préférence, la forme mâle est prévue sur la tête et la forme femelle sur le support. La forme mâle est prévue à l'arrière de la tête du moteur et peut comprendre une jupe cylindrique comportant des échancrures présentant un fond, s'étendant parallèlement à l'axe de la jupe, dans lequel est prévu un orifice pour recevoir une extrémité recourbée de l'organe d'accrochage ; le support comporte une jupe cylindrique dont le diamètre intérieur correspond au diamètre extérieur de la jupe de la tête du moteur, la jupe cylindrique du support comportant deux parties rentrantes vers le centre, conjuguées des échancrures de la jupe de la tête, ces parties rentrantes comportant un fond muni d'un orifice propre à venir en regard de celui correspondant de la tête pour le passage d'une extrémité recourbée de l'organe d'accrochage.

De préférence, les échancrures de la jupe de la tête sont diamétralement opposées, de même que les parties rentrantes de la jupe du support. L'organe de verrouillage s'étend selon un demi-cercle, et les deux extrémités recourbées vers le centre sont alignées.

Le support comporte avantageusement un orifice circulaire central propre à être traversé, avec un jeu réduit, par un téton de centrage en saillie sur une joue sur laquelle est fixé le support ; la tête du moteur comporte une réservation cylindrique pour loger le téton de centrage de la joue.

Le bout de chaque extrémité recourbée de l'organe d'accrochage comporte, de préférence, une rampe propre à coopérer avec une rampe conjuguée prévue sur la forme en saillie de la tête, de telle sorte que par simple engagement en translation de la forme en saillie de la tête dans la forme conjuguée du support, la rampe de la tête en coopérant avec celle de l'organe de verrouillage provoque l'écartement des extrémités de cet organe jusqu'à ce qu'elles entrent dans les orifices de la tête du moteur.

Avantageusement, l'organe de verrouillage est pré-positionné sur la forme du support.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :
Fig. 1 est une vue en perspective éclatée d'une joue de coffre de volet roulant, d'un support moteur et d'un moteur d'entraînement avec tête du moteur.
Fig. 2 est une vue en perspective, à plus grande échelle, de l'arrière de la tête du moteur.
Fig. 3 est une vue partielle en perspective du dispositif de fixation selon l'invention avec support équipé de l'organe de verrouillage la tête de moteur n'étant pas encore fixée.
Fig. 4 est une coupe partielle en perspective à plus grande échelle, par un plan axial vertical passant par les extrémités recourbées de l'organe de verrouillage, de la tête de moteur fixée sur le support moteur, et
Fig. 5 est une vue en perspective de la tête moteur et du support après assemblage et fixation.

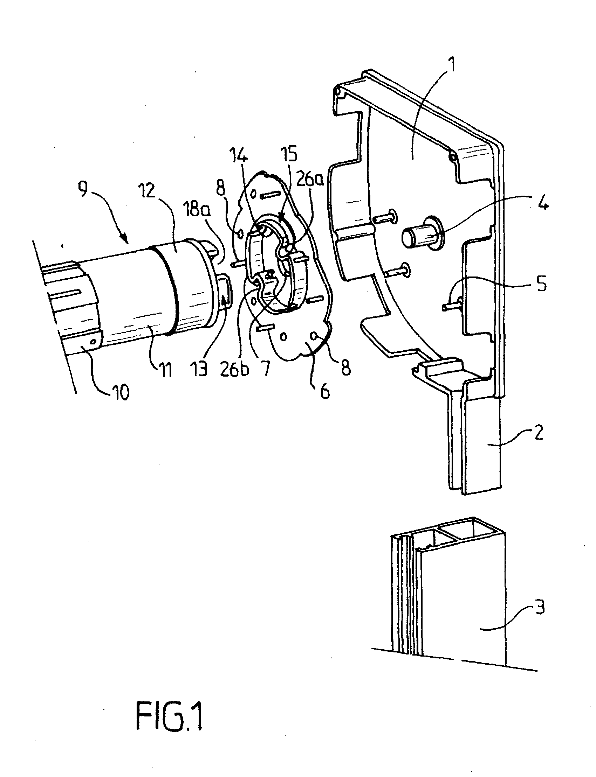

En se reportant à Fig.1 des dessins, on peut voir une joue 1 de coffre de volet roulant munie d'une patte verticale 2 en saillie vers le bas propre à être engagée dans une réservation prévue dans une coulisse verticale 3. La joue 1 comporte, en saillie vers l'intérieur du coffre, un téton central 4 cylindrique, et plusieurs tétons périphériques 5 de plus petit diamètre que le téton central 4. La joue 1 peut être en aluminium ou en alliage léger. Un support 6 est prévu pour être fixé dans la joue 1 en étant centré sur le téton 4 qui traverse, avec un jeu réduit, un orifice central 7 du support.

Le support 6 est constitué par une plaque comportant des orifices 8 propres à être traversés par les tétons périphériques 5 pour assurer l'orientation correcte et l'immobilisation en rotation du support 6 relativement à la joue 1. Le support 6 tient par simple emboîtement sur les tétons de la joue, il est arrêté en translation par l'arbre du volet qui s'appuie dans la joue côté opposé manoeuvre.

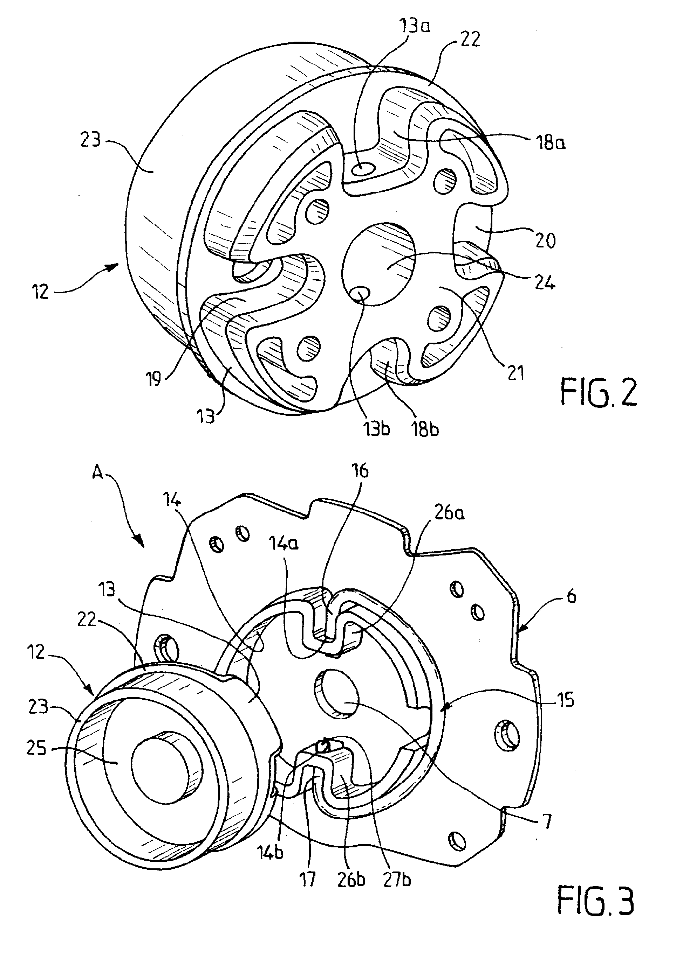

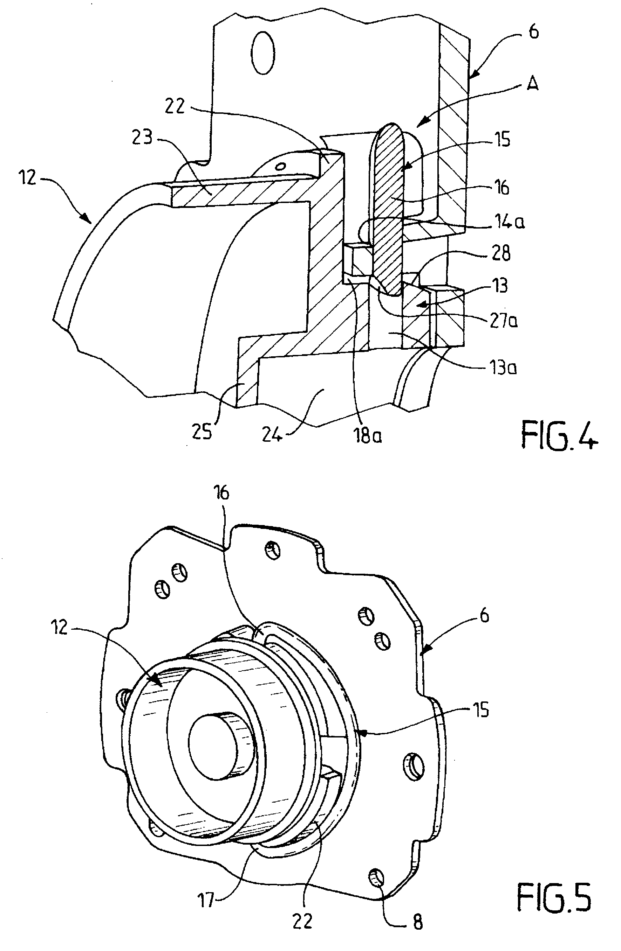

Le moteur électrique 9 d'entraînement d'un tube 10, autour duquel s'enroule le volet roulant, comporte un stator tubulaire 11 engagé dans le tube 10. L'arbre rotatif du moteur (non visible) fait saillie à l'intérieur du tube 10 avec lequel il est en prise en rotation. Le stator 11 est lié à une tête de moteur 12 tournée vers le support 6. La tête 12 est prévue pour être fixée sur le support 6 à l'aide d'un dispositif de fixation A visible sur Fig. 3 et 4.

Le dispositif A de fixation de la tête 12 sur le support 6, dont le plan moyen est orthogonal à l'axe géométrique de rotation du moteur, comprend, du côté de la tête, une forme mâle 13 propre à être engagée, par translation parallèle à l'axe géométrique de la tête, dans une forme femelle conjuguée 14 prévue sur le support 6. Les formes 13 et 14 comportent sur leur périphérie au moins deux orifices 13a, 13b et 14a, 14b écartés angulairement, propres à venir en regard.

Le dispositif de fixation A comprend un organe de verrouillage 15 (Fig.3 et 5) en forme de C à extrémités 16, 17 recourbées vers le centre et propres à s'engager dans les orifices en regard 13a, 14a et 13b, 14b pour verrouiller la tête 12 relativement au support 6, tout en laissant libre la zone centrale de la tête et du support. L'organe de verrouillage 15 est avantageusement constitué par un fil en forme de C dont les extrémités recourbées 16, 17 forment deux becs.

La forme mâle 13 de la tête de moteur, comme visible sur Fig. 2, comprend une jupe cylindrique comportant au moins deux échancrures 18a, 18b de préférence diamétralement opposées. Les échancrures 18a, 18b présentent une section transversale sensiblement en U ; elles sont limitées par un fond s'étendant parallèlement à l'axe géométrique de la tête et dans lequel est prévu l'orifice 13a ou 13b. D'autres évidements tels que 19, 20 ou des logements peuvent être prévus dans la paroi arrière 21 transversale de la tête notamment pour recevoir les tétons périphériques 5 de la joue.

La jupe cylindrique de la forme mâle 13 est bordée par une collerette 22 du côté opposé au support 6, et la tête 12 se prolonge, vers le stator du moteur, par une enveloppe cylindrique 23 afin d'assurer la liaison au stator. La paroi de fond 21 comporte, au centre, une réservation 24 fermée du côté du moteur par une paroi transversale 25 (Fig.3). La réservation 24 permet de recevoir le téton central 4 de la joue 1.

La forme femelle 14 du support 6 est constituée par une jupe cylindrique dont le diamètre intérieur correspond au diamètre extérieur de la forme mâle 13. La jupe cylindrique 14 comporte deux parties en retrait diamétralement opposées 26a, 26b, conjuguées des échancrures 13a, 13b. Le fond transversal des parties 26a, 26b comporte respectivement l'orifice 14a, 14b.

Les extrémités recourbées 16, 17 de l'organe de verrouillage 15 diamétralement opposées sont alignées. Ces extrémités 16, 17 sont engagées dans les orifices 14a, 14b de manière à faire saillie radialement vers l'intérieur (Fig.3) par rapport à la paroi de fond des parties en retrait 26a, 26b. Chaque bout d'une extrémité recourbée 16, 17 présente une rampe 27a, 27b (Fig.3 et 4), en biseau, tournée vers la tête 12 et s'inclinant vers l'axe géométrique de la plaque 6, en s'éloignant de la tête 12.

Sur la tête 12, le bord transversal des échancrures 18a, 18b présente une rampe 28 (Fig. 4) conjuguée des rampes 27a, 27b et se rapprochant de l'axe géométrique de la tête en direction du support 6.

L'organe de verrouillage 15 en C est préalablement monté (Fig.3) par déformation élastique sur le support 6, les becs 16, 17 étant engagés dans les orifices 14a, 14b. L'organe de verrouillage 15 est ainsi pré-positionné, en attente du clipage de la tête 12 sur son support 6.

Pour le montage, la tête de moteur 12 est emboîtée, par translation, dans le support 6, la jupe 13 se logeant à l'intérieur de la jupe femelle 14 et les parties en retrait 26a, 26b du support s'engageant dans les échancrures 18a, 18b de la tête.

Il suffit de pousser la tête 12 dans le support 6 pour que la coopération des rampes 28 prévues sur la tête 12, et des rampes 27a, 27b prévues aux extrémités de l'organe de verrouillage 15, provoque une légère ouverture de cet organe 15 de sorte que la tête 12 arrive à passer entre les deux extrémités 16, 17 recourbées du fil.

La tête 12, en continuant d'avancer par rapport au support 6, permet aux deux becs 16, 17 d'arriver en face des orifices 13a, 13b de la tête ; l'organe 15 peut se refermer élastiquement, emprisonnant ainsi la tête moteur 12 dans le support 6. La tête 12 ne peut pas ressortir par simple traction dans le sens opposé au montage, car il n'y a pas de rampe sur le côté arrière des deux extrémités courbées 15, 16.

Pour le démontage, il faudra au préalable enlever l'organe de verrouillage 15 du support 6 en jouant sur sa déformation élastique afin d'écarter les deux becs 15, 16 du C.

L'organe de verrouillage 15 constitué par le fil en forme de C permet de faire office de goupille, mais au lieu d'être traversant de part en part de la tête moteur 12 et du support 6, il vient se positionner par ses deux extrémités 16, 17 en laissant libre le centre des deux pièces 12 et 6. Dans le cas d'une joue de volet roulant 1 comportant un téton central 4, il n'y a pas d'interférence ni d'incompatibilité de montage. Le support moteur 6 est immobilisé dans la joue 1 à l'aide du téton central 4 qui assure le centrage, et de plusieurs tétons périphériques 5, au nombre de trois dans l'exemple considéré, qui viennent se loger dans les trous 8 du support moteur.

Le dispositif de l'invention permet de fixer par un simple clipage la tête 12 du moteur sur son support 6, sur lequel l'organe de verrouillage 15 est pré-positionné, sans risque de perte.

## Revendications

1. Dispositif de fixation de la tête d'un moteur électrique sur un support dont le plan moyen est orthogonal à l'axe géométrique de rotation du moteur, notamment pour la fixation d'un moteur électrique d'entraînement d'un volet roulant, la tête (12) comportant une forme mâle/femelle (13) propre à coopérer, par translation, avec une forme femelle/mâle conjuguée (14) prévue dans le support (6), **caractérisé en ce que** :
- les formes comportent sur leur périphérie au moins deux orifices (13a, 13b ; 14a, 14b) espacés angulairement, propres à venir en regard pour une orientation relative appropriée des deux formes (13, 14),
- et un organe de verrouillage (15) en forme de C, à extrémités (16, 17) recourbées vers le centre, est prévu pour s'engager, par ses extrémités recourbées, dans les orifices en regard (13a, 14a ; 13b, 14b) des deux formes et verrouiller ainsi la tête (12) relativement au support (6), tout en laissant libre la zone centrale de la tête et du support.

2. Dispositif selon la revendication 1, **caractérisé en ce que** la forme mâle (13) est prévue sur la tête (12) et la forme femelle (14) sur le support (6).

3. Dispositif selon la revendication 1 ou 2, **caractérisé en ce que** la forme mâle est prévue à l'arrière de la tête (12) du moteur et comprend une jupe cylindrique (13) comportant des échancrures (18a, 18b) présentant un fond, s'étendant parallèlement à l'axe de la jupe, dans lequel est prévu un orifice (13a, 13b) pour recevoir une extrémité recourbée (16, 17) de l'organe de verrouillage (15)

4. Dispositif selon la revendication 3, **caractérisé en ce que** le support (6) comporte une jupe cylindrique (14) dont le diamètre intérieur correspond au diamètre extérieur de la jupe (13) de la tête du moteur, la jupe cylindrique (14) du support comportant deux parties rentrantes vers le centre (26a, 26b), conjuguées des échancrures (18a, 18b) de la jupe (13) de la tête, ces parties rentrantes (26a, 26b) comportant un fond muni d'un orifice (14a, 14b) propre à venir en regard de celui (13a, 13b) correspondant de la tête (12) pour le passage d'une extrémité recourbée de l'organe d'accrochage.

5. Dispositif selon la revendication 4, **caractérisé en ce que** les échancrures (13a, 13b) de la jupe (13) de la tête sont diamétralement opposées, de même que les parties rentrantes (26a, 26b) de la jupe (14) du support.

6. Dispositif selon la revendication 5, **caractérisé en ce que** l'organe de verrouillage (15) s'étend selon un demi-cercle, les deux extrémités recourbées vers le centre (16, 17) étant alignées.

7. Dispositif selon l'une quelconque des revendications précédentes, **caractérisé en ce que** le support (6) comporte un orifice circulaire central (7) propre à être traversé, avec un jeu réduit, par un téton de centrage (4) en saillie sur une joue (1) sur laquelle est fixé le support , et la tête (12) du moteur comporte une réservation cylindrique (24) pour loger le téton de centrage (4) de la joue.

8. Dispositif selon l'une quelconque des revendications précédentes, **caractérisé en ce que** le bout de chaque extrémité recourbée (16, 17) de l'organe d'accrochage (15) comporte une rampe (27a, 27b) propre à coopérer avec une rampe conjuguée (28) prévue sur la forme en saillie (13) de la tête, de telle sorte que par simple engagement en translation de la forme en saillie (13) de la tête dans la forme conjuguée (14) du support, la rampe de la tête en coopérant avec celle de l'organe de verrouillage provoque l'écartement des extrémités de cet organe jusqu'à ce qu'elles entrent dans les orifices de la tête du moteur.

9. Dispositif selon la revendication 8, **caractérisé en ce que** l'organe de verrouillage (15) est pré-positionné sur la forme (14) du support (6).

## Patentansprüche

1. Vorrichtung zur Befestigung des Kopfs eines Elektromotors an einer Halterung, deren Mittelebene zur geometrischen Drehachse des Motors orthogonal ist, insbesondere zur Befestigung eines elektrischen Rollladenantriebsmotors, wobei der Kopf (12) eine männliche/weibliche Form (13) aufweist, die geeignet ist, mit einer in der Halterung (6) vorgesehenen komplementär geformten weiblichen/männlichen Form (14) durch Translation zusammenzuwirken, **dadurch gekennzeichnet, dass**:
- die Formen an ihrem Umfang mindestens zwei winkelmäßig beabstandete Öffnungen (13a, 13b; 14a, 14b) aufweist, die geeignet sind, zur korrekten relativen Ausrichtung der beiden Formen (13, 14) einander gegenüberliegend angeordnet zu werden,
- und ein C-förmiges Verriegelungsorgan (15) mit zur Mitte hin gebogenen Enden (16, 17) vorgesehen ist, um mit seinen gebogenen Enden in die einander gegenüberliegenden Öffnungen (13a, 13b; 14a, 14b) der Formen einzugreifen und auf diese Weise den Kopf (12) in Bezug zu der Halterung (6) zu verriegeln, wobei die Mittelzone des Kopfs und der Halterung frei bleibt.

2. Vorrichtung nach Anspruch 1, **dadurch gekennzeichnet, dass** die männliche Form (13) an dem Kopf (12) und die weibliche Form (14) an der Halterung (6) vorgesehen ist,

3. Vorrichtung nach Anspruch 1 oder 2, **dadurch gekennzeichnet, dass** die männliche Form auf der Rückseite des Kopfes (12) vorgesehen ist und eine zylindrische Schürze (13) mit Ausnehmungen (18a, 18b) aufweist, die mit einem sich parallel zur Achse der Schürze erstreckenden Boden versehen sind, in welchem eine Öffnung (13a, 13b) zum Aufnehmen eines gebogenen Endes (16, 17) des Verriegelungsorgans (15) vorgesehen ist.

4. Vorrichtung nach Anspruch 3, **dadurch gekennzeichnet, dass** die Halterung (6) eine zylindrische Schürze (14) aufweist, deren Innendurchmesser den Außendurchmesser der Schürze (13) des Motorkopfs entspricht, wobei die zylindrische Schürze (14) der Halterung zur Mitte hin zurückspringende Bereiche (26a, 26b) aufweist, die zu den Ausnehmungen (18a, 18b) der Schürze (13) des Kopfs komplementär geformt sind, wobei die zurückspringenden Bereiche (26a, 26b) einen Boden mit einer Öffnung (14a, 14b) aufweisen, die geeignet ist, der entsprechenden Öffnung (13a, 13b) des Kopfs (12) gegenüber zu liegen, um das Hindurchtreten eines gebogenen Endes des Verriegelungsorgans zu ermöglichen.

5. Vorrichtung nach Anspruch 4, **dadurch gekennzeichnet, dass** die Ausnehmungen (13a, 13b) der Schürze (13) des Kopfs, in gleicher Weise wie die zurückspringenden Bereiche (26a, 26b) der Schürze (14) der Halterung, einander diametral gegenüberliegend angeordnet sind.

6. Vorrichtung nach Anspruch 5, **dadurch gekennzeichnet, dass** das Verriegelungsorgan (15) sich halbkreisförmig erstreckt, wobei die beiden zur Mitte hin gebogenen Enden (16, 17) miteinander fluchten.

7. Vorrichtung nach einem der vorhergehenden Ansprüche **dadurch gekennzeichnet, dass** die Halterung (6) eine mittige kreisförmige Öffnung (7) aufweist, durch die sich ein von einer Wange (1), an welcher die Halterung befestigt ist, abstehender Zentrierstift (4) mit geringem Spiel erstreckt, und dass der Kopf (12) des Motors eine zylindrische Ausnehmung (24) zum Aufnehmen des Zentrierstifts (4) der Wange aufweist.

8. Vorrichtung nach einem der vorhergehenden Ansprüche, **dadurch gekennzeichnet, dass** das der vordere Bereich jedes gebogenen Endes (16, 17) des Verriegelungsorgans (15) eine Schrägfläche (27a, 27b) aufweist, die geeignet ist, mit einer an der vorstehenden Form (13) des Kopfs ausgebildeten komplementären Schrägfläche (28) derart zusammenzuwirken, dass durch einfaches Einsetzen der vorstehenden Form (13) des Kopfs in die komplementäre Form (14) der Halterung durch Verschieben, die Schrägfläche des Kopfs durch Zusammenwirken mit derjenigen des Verriegelungsorgans ein Auseinanderspreizen der Enden dieses Organs bewirken, bis diese in die Öffnungen des Motorkopfs eintreten.

9. Vorrichtung nach Anspruch 8, **dadurch gekennzeichnet, dass** das Verriegelungsorgan (15) auf der Form (14) der Halterung (6) vorab angeordnet ist.

## Claims

1. Device for fixing the head of an electric motor on a support whose median plane is orthogonal to the geometric axis of rotation of the motor, in particular for fixing an electric drive motor of a roller blind, the head (12) comprising a male/female shape (13) able to cooperate, by translation, with a mating female/male shape (14) provided in the support (6), **characterized in that**:
- the shapes comprise on their periphery at least two orifices (13a, 13b; 14a, 14b) spaced angularly and able to face one another in order to provided a suitable relative orientation of the two shapes (13, 14),
- and a C-shaped locking member (15), with ends (16, 17) curved towards the centre, is provided to engage, by its curved ends, in the facing orifices (13a, 14a; 13b, 14b) of the two shapes and thus lock the head (12) relative to the support (6), while leaving free the central zone of the head and of the support.

2. Device according to Claim 1, **characterized in that** the male shape (13) is provided on the head (12) and the female shape (14) on the support (6).

3. Device according to Claim 1 or 2, **characterized in that** the male shape is provided at the rear of the head (12) of the motor and comprises a cylindrical skirt (13) comprising notches (18a, 18b) having a bottom, extending parallel to the axis of the skirt, in which bottom there is provided an orifice (13a, 13b) for receiving a curved end (16, 17) of the locking member (15).

4. Device according to Claim 3, **characterized in that** the support (6) comprises a cylindrical skirt (14) whose inside diameter corresponds to the outside diameter of the skirt (13) of the head of the motor, the cylindrical skirt (14) of the support comprising two parts (26a, 26b) which are re-entrant towards the centre and mate with the notches (18a, 18b) of the skirt (13) of the head, these re-entrants parts (26a, 26b) comprising a bottom provided with an orifice (14a, 14b) able to face the corresponding orifice (13a, 13b) of the head (12) for the passage of a curved end of the fastening member.

5. Device according to Claim 4, **characterized in that** the notches (13a, 13b) of the skirt (13) of the head are diametrically opposed, as are the re-entrant parts (26a, 26b) of the skirt (14) of the support.

6. Device according to Claim 5, **characterized in that** the locking member (15) extends in a semicircle, the two ends (16, 17) curved towards the centre being aligned.

7. Device according to any one of the preceding claims, **characterized in that** the support (6) comprises a central circular orifice (7) able to be traversed, with a small clearance, by a centring stud (4) projecting from a side plate (1) on which the support is fixed, and the head (12) of the motor comprises a cylindrical recess (24) to house the centring stud (4) of the side plate.

8. Device according to any one of the preceding claims, **characterized in that** the tip of each curved end (16, 17) of the fastening member (15) comprises a ramp (27a, 27b) able to cooperate with a mating ramp (28) provided on the projecting shape (13) of the head, such that, by simple translational engagement of the projecting shape (13) of the head in the mating shape (14) of the support, the ramp of the head, while cooperating with the ramp of the locking member, causes the ends of this member to move apart until they enter the orifices of the head of the motor.

9. Device according to Claim 8, **characterized in that** the locking member (15) is pre-positioned on the shape (14) of the support (6).
